# EUROPEAN PATENT SPECIFICATION

(11) **EP 3 136 697 B1**
(45) Date of publication and mention of the grant of the patent: **11.05.2022**
(21) Application number: 16186562.1
(22) Date of filing: 31.08.2016
(51) Int. Cl.: H04M 1/2745, G06F 16/215, G06F 16/2455, H04M 1/27453, H04M 1/27457, H04M 1/2757, H04M 1/2746, H04M 1/57, H04W 4/00, H04W 8/20

(54) **CONTACT RECORD PROCESSING METHOD AND APPARATUS**
KONTAKTAUFZEICHNUNGSVERARBEITUNGSVERFAHREN UND VORRICHTUNG
PROCÉDÉ ET APPAREIL DE TRAITEMENT D'ENREGISTREMENTS DE CONTACT

(30) Priority: 31.08.2015 CN 201510549128
(43) Date of publication of application: 01.03.2017
(73) Proprietor: Xiaomi Inc., Beijing 100085 (CN)
(72) Inventor: LIU, Guilin, Haidian District, Beijing 100085 (CN); WU, Changliang, Haidian District, Beijing 100085 (CN); ZHANG, Peng, Haidian District, Beijing 100085 (CN)
(74) Representative: Millburn, Julie Elizabeth

(56) References cited:
- WO-A1-2009/017850
- CN-A- 105 100 355
- US-A1- 2006 229 063
- US-A1- 2006 286 971
- US-A1- 2009 156 186
- US-A1- 2011 244 838

## Description

### TECHNICAL FIELD

The present application relates to the field of communications technologies, and more particularly relates to a contact record processing method and apparatus.

### BACKGROUND

With the development of mobile communications technologies, people are capable of making conservations with others anytime and anywhere, which brings great convenience to their daily life. At present, virtual SIM (Subscriber Identity Module) card services are becoming more and more popular. After buying the virtual SIM card service, a user obtains a temporary mobile phone number. The temporary mobile phone number becomes invalid after the deadline of the use term thereof, and is not conveniently managed by the user in an address book. US 2011/0244838 relates to a method of managing contacts lists comprising sensing contact information provided by broadcast services that the user is interested in. US 2006/0229063 describes a system for updating contact information based on identification information received from a mobile device. US 2006/0286971 relates to a method for automatically storing contact information received from a directory assistance service.

### SUMMARY

To overcome the problem in the related art, the present disclosure provides a contact record processing method and apparatus as defined in the independent claims.

Preferable features are set out in the dependent claims

The technical solutions provided in the embodiments of the present disclosure may achieve the following beneficial effects.

According to the present disclosure, a use term of a phone number stored in a contact record may be determined, and it may be detected whether use time of the phone number is greater than the use term of the phone number; and when the use time is greater than the use term, the phone number may be automatically deleted from the contact record. According to the present disclosure, the phone number having a use term is automatically deleted from the contact record when the use term is expired, thereby assisting a user to conveniently manage an address book and bringing great convenience to the user.

In the present disclosure, since the use term is acquired according to a predetermined period, the use term may be timely updated where the use term is changed, such that whether the use term of the phone number is expired is determined more accurately.

In the present disclosure, the manner of acquiring the use term from a service end is simpler in implementation. This manner is smarter, and may reduce user operations and bring great convenience to the user.

In the present disclosure, a call connection request from a calling end may be received; and when the phone number is not stored in a contact record of the called end, calling user information of the calling end queried by the service end may be acquired, and a corresponding target contact in the contact record may be determined according to the calling user information. Therefore, according to the present disclosure, the phone number may be automatically added to user information corresponding to the target contact. According to the present disclosure, more user information of a calling user may be acquired via a service end, and thus the calling user may be identified and the phone number may be automatically stored, which brings great convenience to the user.

In the present disclosure, since user information corresponding to a plurality of users is recorded in the service end, an incoming phone number may be sent to the service end, such that the service end may query user information of the calling end according to the incoming phone number. This manner is simple in implementation and achieves high accuracy.

In the present disclosure, the service end may query a use term corresponding to a phone number and provide the use term to the terminal, such that the terminal deletes the phone number from the contact record when detecting that use time of the phone number is greater than the use term, thereby assisting a user to conveniently manage an address book and bringing great convenience to the user.

In the present disclosure, the service end may record a corresponding relationship between phone numbers and use terms by establishing a first predetermined relationship table. When a terminal needs to acquire a use term, the service end may query the corresponding use term from the first predetermined relationship table according to the phone number sent by the terminal, and feed back the use term to the terminal. This manner is simple in implementation, which facilitates query of the use term and achieves high accuracy.

In the present disclosure, the service end may feed back calling user information to the terminal, and the terminal adds the phone number to user information of a target contact corresponding to the calling user information in the contact record, such that upon receipt of a call initiated by the calling end by using a temporary phone number, the terminal automatically adds the temporary phone number to the contact record.

In the present disclosure, the service end may record a corresponding relationship between phone numbers and user information by establishing a second predetermined relationship table. When a terminal needs to acquire calling user information, the service end may query the corresponding calling user information from the second predetermined relationship table according to the incoming phone number sent by the terminal, and feed back the calling user information to the terminal. This manner is simple in implementation, which facilitates query of the calling user information and achieves high accuracy.

It shall be appreciated that the above general description and the detailed description hereinafter are only illustrative and interpretative, but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure.
Fig. 1 is a flowchart illustrating a contact record processing method according to an exemplary embodiment of the present disclosure;
Fig. 2A is a flowchart illustrating another contact record processing method according to an exemplary embodiment of the present disclosure;
Fig. 2B is a flowchart illustrating another contact record processing method according to an exemplary embodiment of the present disclosure;
Fig. 3 is a flowchart illustrating another contact record processing method according to an exemplary embodiment of the present disclosure;
Fig. 4 is a block diagram illustrating a contact record processing apparatus according to an exemplary embodiment of the present disclosure;
Fig. 5 to Fig. 12 are block diagrams illustrating another contact record processing apparatus according to an exemplary embodiment of the present disclosure;
Fig. 13 is a block diagram illustrating an apparatus for use in contact record processing according to an exemplary embodiment of the present disclosure; and
Fig. 14 is a block diagram illustrating another apparatus for use in contact record processing according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terminology used in the present disclosure is for the purpose of describing particular embodiments only and is not intended to limit the present disclosure. As used in the present disclosure and the appended claims, the singular forms "a", "an" and "the" are intended to include the plural forms as well, unless the context clearly indicates otherwise. It shall also be understood that the term "and/or" used herein is intended to signify and include any or all possible combinations of one or more of the associated listed items.

It shall be understood that, although the terms first, second, third, etc. may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if' may be understood to mean "when" or "upon" or "in response to determining" depending on the context.

Contact record processing methods according to embodiments of the present disclosure may be applied for automatic management of phone numbers having a use term. A terminal according to embodiments of the present disclosure is capable of detecting whether use time of a phone number stored in a contact record is greater than a use term; and when the use time is greater than the use term, the terminal may automatically delete the phone number from the contact record, thereby assisting a user to conveniently manage an address book and bringing convenience to the user.

In the embodiments of the present disclosure, the terminal may be a smart terminal having the address book function, for example, a smart phone, a tablet computer, a personal digital assistant (PDA), an electronic book reader, a multimedia player or the like. The smart terminal is generally mounted with an address book application. One or a plurality of contacts and user information corresponding to the contacts are stored in a contact record in the address book. The user information generally includes at least a user name, and one or a plurality of phone numbers (when the smart terminal is capable of providing the multi-SIM card function or providing the virtual SIM card function, the user information may include a plurality of phone numbers). The user information may further include a fax number, an instant messaging account (for example, a Miliao account, a QQ account, a Weixin account or the like), an Email address, a personal homepage, a company address, a residential address, birthday and the like information.

When a terminal (a called end) receives a call connection request from another terminal (a calling end), the called end may acquire an incoming phone number according to the call connection request. If the incoming phone number has been stored in the above contact record, a target contact corresponding to the incoming phone number may be determined, and the called end may display in a call incoming interface a user name of the target contact, such that a user knows the identity of the calling end who initiates the call connection request.

Generally, a terminal user needs to manage the above contact record, for example, adding a contact and user information corresponding to the contact, or modifying user information, or deleting a contact or the like. The embodiments of the present disclosure may be applied for automatic management of phone numbers having a use term that are stored in the contact record. For example, a common application scenario is automatic management of temporary phone numbers of virtual SIM cards stored in the contact record.

After buying a virtual SIM card service provided by a service provider, a user (a calling user) may obtain temporary phone numbers provided by the service provider. A virtual SIM card is a technology for directly storing file parameters of a traditional physical SIM card to a terminal. The virtual SIM card does not need a physical SIM card, and practical SIM card functions may be implemented in the virtual SIM card by using the processing function of a smart terminal itself. To be specific, the SIM card functions may be implemented only by a program function module of the smart terminal by using the resources on the smart terminal. The smart terminal in this embodiment may be any smart terminal having the virtual SIM card management function.

The phone number provided by the virtual SIM card service generally has a specific use term, wherein the use term varies with the practical selection of the user, for example, the use term may be one week, one month, five months or other time durations. If the temporary phone number has been stored in the address book of the smart terminal of a user, the temporary phone number will become invalid at and after the expiry date, which is not favorable to user's management.

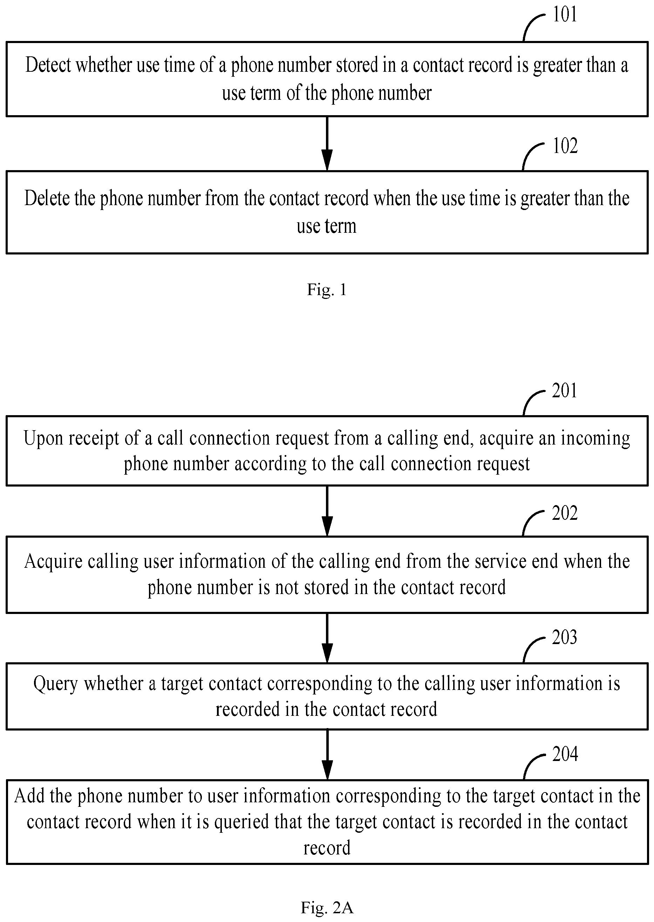

Hereinafter, a process of a contact record processing method according to an exemplary embodiment of the present disclosure is described with reference to Fig. 1. Fig. 1 is a flowchart illustrating a contact record processing method according to an exemplary embodiment. The method may be applied in an aforementioned terminal, and include the following steps.

In step 101, it is detected whether use time of a phone number stored in a contact record is greater than a use term of the phone number.

In the embodiments of the present disclosure, the phone number may be a commonly used fixed telephone number, a phone number provided by a mobile service provider, a short number provided by short number cluster network service of a mobile service provider, a virtual temporary phone number provided by a virtual service provider, or the like.

The terminal may compare the use time of a phone number stored in a contact record with the use term of the phone number, to determine whether the use time is greater than the use term. If the use time is greater than the use term, the phone number becomes invalid, and may be deleted from the contact record. The terminal may determine the use term of a phone number in various manners. To be specific, the terminal may acquire the use term of the phone number from the owner of the phone number (that is, the above described calling user who buys the virtual SIM card service). For example, the terminal may query the owner of the phone number and hence input the use term to the smart terminal for recording during storing of the phone number, and in this case, the smart terminal may determine, according to the use term, whether the phone number is invalid. In other optional implementation manners, the use term may also be acquired from the service provider providing the virtual SIM card service.

Generally, the use term may be a time duration of one week, one month, five months or the like starting from the date on which the phone number is bought. When detecting whether the use time of the phone number is greater than the use term, the terminal may compare the current use time of the phone number with the above defined use term. When the use time is greater than the use term, the phone number is determined to become invalid. For example, assume that the use term of a phone number recorded in the terminal is three months, from May 1 to July 31, when detection is carried out on August 1, it may be determined that the phone number becomes invalid and may be deleted since the date August 1 is after the deadline of the use term, July 31.

During the detection of the use term, the terminal may carry out real-time detection or periodical detection, for example, detection at 12:00 p.m. each day, or the like.

In practical applications, the use term of a phone number may vary. For example, the user who buys the phone number may make a fee recharge before the expiration of the use term, such that the use term of the phone number is prolonged to obtain a new use term. Therefore, in an optional implementation manner, the method may further include:
acquiring the use term according to a predetermined period.

The predetermined period may be 5 days, 10 days, 30 days or the like, and a person skilled in the art may flexibly define the period according to actual needs, which is thus not defined herein.

In this embodiment, since the use term is acquired according to a predetermined period, the use term may be timely updated where the use term is changed, such that whether the use term of the phone number is expired is determined more accurately.

Optionally, the acquiring the use term according to a predetermined period may include:
uploading the phone number to a service end according to a predetermined period; and
receiving a use term queried according to the phone number from the service end.

In this embodiment, the use term may be acquired from the service end. The service end may be a server, or a service cluster formed of a plurality of servers, or a cloud computing service center. The service end may be a service end which provides the above virtual SIM card service. In addition, the service end which provides the virtual SIM card service may also be a service end associated with the smart terminal. For example, when a user uses a mobile phone, the service end is a mobile phone network service end, the network service end further provides the virtual SIM card service, and the user may log in to the network service end via a defined user account. The user account may be a network account or may be another account bound to the network account, as long as the network service end can be logged in to via this account.

Since when the user buys the virtual SIM card service at the service end, the service end records the use term of a phone number provided for the user, the service end may provide the use term to another user who needs to store the phone number. Therefore, during acquisition of the use term, the terminal may upload a phone number to the service end, such that the terminal receives the use term queried by the service end according to the phone number. In this embodiment, the manner of acquiring the use term from a service end is simpler in implementation. This manner is smarter, and may reduce user operations and bring great convenience to the user.

In step 102, the phone number is deleted from the contact record when the use time is greater than the use term.

When it is determined in step 101 that the use time of the phone number is greater than the use term, the phone number has become invalid, and may be deleted from the contact record.

According to the above embodiment, a use term of a phone number stored in a contact record may be determined, and it may be detected whether use time of the phone number is greater than the use term of the phone number; and when the use time is greater than the use term, the phone number may be automatically deleted from the contact record. According to the present disclosure, the phone number having a use term is automatically deleted from the contact record when the use term is expired, thereby assisting a user to conveniently manage an address book and bringing great convenience to the user.

Referring to Fig. 2A, Fig. 2A is a flowchart illustrating another contact record processing method according to an exemplary embodiment. The method may be applied in a terminal. Based on the embodiment as illustrated in Fig. 1, the method describes how to automatically add a phone number to a contact record, which includes the following steps.

In step 201, upon receipt of a call connection request from a calling end, an incoming phone number is acquired according to the call connection request.

Phone calling involves a calling end and a called end. The calling end is a call outcoming party, which generally "makes a call"; and the called end is a call incoming party, which generally "answers a call". The call outcoming party is the calling end, and the call incoming party is the called end. In the embodiments of the present disclosure, the called end and the calling end may be any smart terminal having the call function. The method according to the embodiment of the present disclosure may be applied to the above described called end. The calling end initiates a call connection request to the called end. The call connection request generally carries an incoming phone number. The incoming phone number may be a commonly used fixed telephone number, a phone number provided by a mobile service provider, a short number provided by short number cluster network service of a mobile service provider, a virtual temporary phone number provided by a virtual service provider, or the like.

In step 202, calling user information of the calling end is acquired from the service end when the phone number is not stored in the contact record.

When buying the virtual SIM card service, the calling user may use a temporary phone number to call a called user. When a call connection request is received by a smart terminal of the called user, the call connection request corresponds to the temporary phone number of the calling user. Although the contact record of the calling user is stored in the smart terminal of the called user, the temporary phone number is not included in the user information corresponding to the calling user. Therefore, the called end cannot identify the calling user corresponding to the incoming temporary telephone number. In this case, the calling user information of the calling end sent by the service end may be acquired by the called end.

User information of one or more users may be recorded in the service end. For example, a smart terminal may upload one or a plurality of pieces of user information thereof to the service end after logging in to a service end associated therewith. The user information may include, but not limited to: a user name, one or a plurality of phone numbers (when the smart terminal is capable of providing the multi-SIM card function or providing the virtual SIM card function, the user information may include a plurality of phone numbers), a fax number, an instant messaging account (for example, a Miliao account, a QQ account, a Weixin account or the like), an Email address, a personal homepage, a company address, a residential address, birthday and the like user information. To uniquely distinguish the user identities to improve the identification success rate, in the embodiments of the present disclosure, the calling user information returned by the service end to the called end may be a phone number, an instant messaging account, an Email address, a personal homepage or the like information.

In step 203, it is queried whether a target contact corresponding to the calling user information is recorded in the contact record.

One or a plurality of contacts and user information corresponding to the contacts are recorded in the contact record. Since at least one contact and user information corresponding to the contact are recorded in the contact record, when the calling user information is acquired from the service end, the contact corresponding to the calling user information may be queried in the contact record, that is the target contact, or the above mentioned calling user.

In step 204, the phone number is added to user information corresponding to the target contact in the contact record when it is queried that the target contact is recorded.

In the embodiments of the present disclosure, the called end may receive a call connection request from a calling end; and when the phone number is not stored in a contact record of the called end, calling user information of the calling end queried by the service end may be acquired and a corresponding target contact in the contact record may be determined according to the calling user information, wherein the target contact is the calling user initiating a call. Therefore, according to the embodiments of the present disclosure, the phone number may be automatically added to user information corresponding to the target contact. According to the embodiments of the present disclosure, more user information of a calling user may be acquired via a service end, and thus the calling user may be identified and the phone number may be automatically stored, which brings great convenience to the user.

In an optional implementation manner, the acquiring calling user information of the calling end from the service end includes:
sending the incoming phone number to the service end; and
receiving calling user information queried according to the incoming phone number from the service end.

The incoming phone number refers to a phone number corresponding to the calling end. Since user information corresponding to a plurality of users is recorded in the service end, an incoming phone number may be sent from the called end to the service end, such that the service end may query user information of the calling end according to the incoming phone number. This manner is simple in implementation and achieves high accuracy.

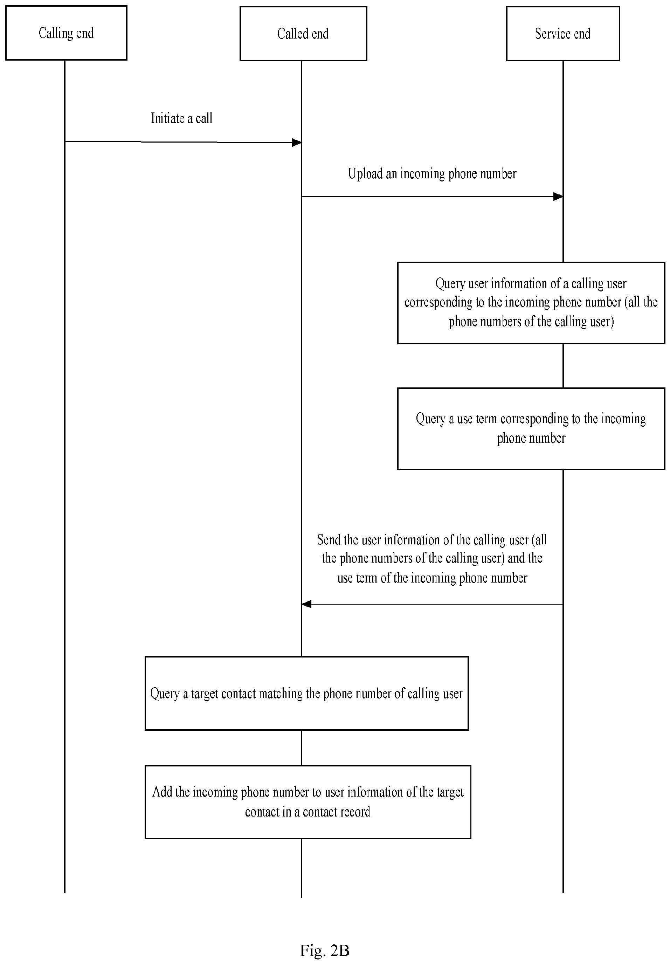

Further description is given hereinafter with reference to a flowchart illustrating another contact record processing method as illustrated in Fig. 2B. A physical SIM card is inserted in a calling end, and the physical SIM card corresponds to a commonly used phone number. A calling user and the commonly used phone number are stored in a contact record of the called end. The calling end may further have the virtual SIM card function, and the virtual SIM card corresponds to a temporary phone number. The calling end may initiate a call to the called end through the temporary phone number corresponding to the virtual SIM card, and the called end receives the call through a call connection request from the calling end. Since the temporary phone number corresponding to the virtual SIM card is not recorded in the called end, the incoming phone number may be uploaded to a network server via the Internet.

The network server receives the uploaded incoming phone number (that is, the above temporary phone number corresponding to the virtual SIM card). Since a corresponding relationship between user information and phone numbers is recorded in the service end, the user information of the corresponding calling end may be queried by the service end. Meanwhile, a use term corresponding to the incoming phone number may be queried by the server.

There may be one or a plurality of pieces of queried user information of the calling end, such as a user account, a user name, a phone number or an Email address or the like of the calling user.

The network server may return one or a plurality of pieces of user information to the called end. To improve the identification success rate, user information returned to the called end by the service end in this embodiment may be all phone numbers of the user, which may include the above commonly used phone number of the calling user. Meanwhile, the network server may further return the use term of the temporary phone number.

According to all the returned phone numbers of the calling user, the called end may acquire the corresponding target contact (that is, the calling user) by matching the stored contacts from a contact list in an address book.

After the called end matches the target contact, the temporary phone number may be added to the user information corresponding to the target contact in the contact record, and a user name of the calling user is displayed in an incoming interface, such that the called user knows the identity of the calling user. Meanwhile, the called end may also acquire the use term of the phone number from the service end, and when it is monitored that the use term is reached, the phone number is deleted from the contact record.

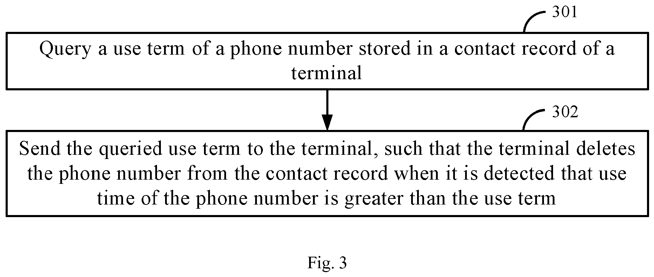

Referring to Fig. 3, Fig. 3 is a flowchart illustrating another contact record processing method according to an exemplary embodiment of the present disclosure. The method may be applied in a service end, and include the following steps.

In step 301, a use term of a phone number stored in a contact record of a terminal is queried.

In step 302, the queried use term is sent to the terminal, such that the terminal deletes the phone number from the contact record when it is detected that use time of the phone number is greater than the use term.

In the embodiments of the present disclosure, the service end may be a server, or a service cluster formed of a plurality of servers, or a cloud computing service center. The service end may be a service end associated with a smart terminal. For example, if a user uses a first mobile phone, the service end is the first network service end; if a user uses a second mobile phone, the service end is second network service end. When the service end is the first network service end, the user may log in to the first network service end via a defined user account, and the user account may be a first network account, or may be other accounts bound to the first network account, for example, a third network account, a fourth network account and the like, as long as the first network service end can be logged in to via these accounts.

Since the user buys the virtual SIM card service in the service end, the service end may record the use term of the temporary phone number provided for the user. The service end may provide the use term to other users who need to store the above telephone number, such that the smart terminals of the other users delete the phone number from the contact record when detecting that use time of the phone number is greater than the use term.

According to the above embodiment, the service end in this embodiment may query a use term corresponding to a phone number and provides the use term to a terminal, such that the terminal deletes the phone number from the contact record when detecting that use time of the phone number is greater than the use term, thereby assisting a user to conveniently manage an address book and bringing great convenience to the user.

In an optional implementation manner, the querying a use term of a phone number stored in a contact record of a terminal includes:
receiving a phone number uploaded by the terminal; and
querying a use term corresponding to the phone number in a first predetermined relationship table, a corresponding relationship between phone numbers and use terms being recorded in the first predetermined relationship table.

In the embodiments of the present disclosure, the service end may record a corresponding relationship between phone numbers and use terms by establishing a first predetermined relationship table. When a terminal needs to acquire a use term, the service end may query the corresponding use term from the predetermined relationship table according to the phone number sent by the terminal, and feed back the use term to the terminal. This manner is simple in implementation, which facilitates query of the use term and achieves high accuracy.

In an optional implementation manner, the method may further include:
querying calling user information of a calling end initiating a call connection request to the terminal; and
sending the calling user information to the terminal, such that the terminal adds the phone number to user information of a target contact corresponding to the calling user information in the contact record.

In the embodiments of the present disclosure, a smart terminal may upload one or a plurality of pieces of user information thereof to the service end after logging in to a service end associated therewith. The user information may include, but not limited to: a user name, one or a plurality of phone numbers (when the smart terminal is capable of providing the multi-SIM card function or providing the virtual SIM card function, the user information may include a plurality of phone numbers), a fax number, an instant messaging account (for example, a Miliao account, a QQ account, a Weixin account or the like), an Email address, a personal homepage, a company address, a residential address, birthday and the like user information. To uniquely distinguish the user identities to improve the identification success rate, in the embodiments of the present disclosure, the calling user information returned by the service end to the terminal may be a phone number, an instant messaging account, an Email address, a personal homepage or the like information.

The service end may feed back calling user information to the terminal, and the terminal adds the phone number to user information of a target contact corresponding to the calling user information in the contact record, such that upon receipt of a call initiated by the calling end by using a temporary phone number, the terminal automatically adds the temporary phone number to the contact record.

In an optional implementation manner, the querying calling user information of a calling end initiating a call connection request to the terminal may include:
receiving an incoming phone number uploaded by the terminal upon receipt of the call connection request; and
querying calling user information corresponding to the incoming phone number in a second predetermined relationship table, a corresponding relationship between user information and phone numbers being recorded in the second predetermined relationship table.

In the embodiments of the present disclosure, since the user information may include various information, such as a phone number, a user name, a user account and the like, the service end may record a corresponding relationship between user information and phone numbers or the like of smart terminals. In practical applications, the service end may record a corresponding relationship of user information by establishing a second predetermined relationship table.

For example, as listed in the following Table 1, partial user information recorded in the second predetermined relationship table in the service end is illustrated.

| User Information | User 1 | User 2 | User 3 |
|---|---|---|---|
| Network Account | 11110 | 11120 | 11130 |
| Smart Terminal | Smart Terminal 1 (MAC Address 1) | Smart Terminal 2 (MAC Address 2) | Smart Terminal 3 (MAC Address 3) |
| User Name | Mr. Zhang San | Mr. Li Si | Mr. Wang Wu |
| Phone Number 1 | 13588881111 | 13688882222 | 15988883333 |
| Phone Number 2 | 55551111 | 55552222 | 55553333 |
| Miliao Account | 666611 | 666622 | 666633 |
| Email Address | 666611@xiaomi.com | 666622@xiaomi.com | 666633@xiaomi.com |

It can be seen from Table 1 that user information of three users has been recorded. The recorded user information includes a network account, a smart terminal (using the MAC address as a unique identity), a user name, a phone number 1, a phone number 2, a Miliao account, and an Email address. The service end has recorded the corresponding relationship of the user information of each user by using the table.

It should be noted that the above first and second predetermined relationship tables are used to distinguish the two involved corresponding relationships: a corresponding relationship between phone numbers and use terms, and a corresponding relationship between user information and phone numbers. In practical applications, since the user information may include phone numbers, the service end may establish only one data recording table to record the above two corresponding relationships.

In the embodiment of the present disclosure, the service end may record a corresponding relationship between phone numbers and user information by establishing a second predetermined relationship table. When a terminal needs to acquire calling user information, the service end may query the corresponding calling user information from the second predetermined relationship table according to the incoming phone number sent by the terminal, and feed back the calling user information to the terminal. This manner is simple in implementation, which facilitates query of the calling user information and achieves high accuracy.

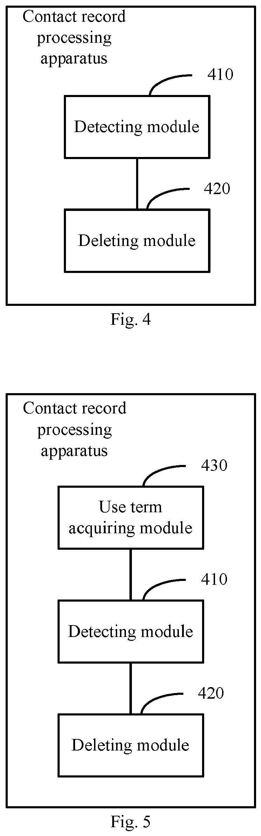

As illustrated in Fig. 4, Fig. 4 is a block diagram of a contact record processing apparatus according to an exemplary embodiment of the present disclosure. The apparatus includes: a detecting module 410 and a deleting module 420.

The detecting module 410 is configured to detect whether use time of a phone number stored in a contact record is greater than a use term of the phone number.

The deleting module 420 is configured to delete the phone number from the contact record when it is detected by the detecting module 410 that the use time of the phone number is greater than the use term.

According to the above embodiment, a use term of a phone number stored in a contact record may be determined, and it may be detected whether use time of the phone number is greater than the use term of the phone number; and when the use time is greater than the use term, the phone number may be automatically deleted from the contact record. According to the present disclosure, the phone number having a use term is automatically deleted from the contact record when the use term is expired, thereby assisting a user to conveniently manage an address book and bringing great convenience to the user.

Referring to Fig. 5, Fig. 5 is a block diagram illustrating another contact record processing apparatus according to an exemplary embodiment of the present disclosure. Based on the embodiment as illustrated in Fig. 4, in this embodiment, the apparatus may further include a use term acquiring module 430.

The use term acquiring module 430 is configured to acquire the use term according to a predetermined period.

According to the above embodiment, since the use term is acquired according to a predetermined period, the use term may be timely updated where the use term is changed, such that whether the use term of the phone number is expired is determined more accurately.

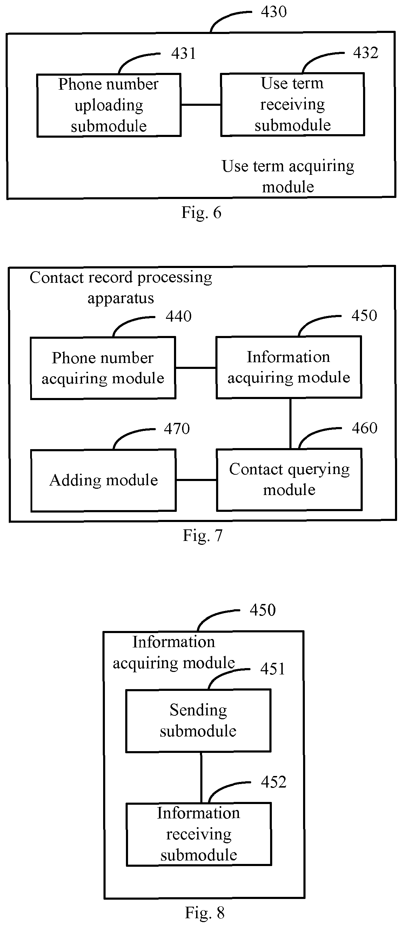

Referring to Fig. 6, Fig. 6 is a block diagram illustrating another contact record processing apparatus according to an exemplary embodiment of the present disclosure. Based on the embodiment as illustrated in Fig. 4, in this embodiment, the use term acquiring module 430 includes: a phone number uploading submodule 431 and a use term receiving submodule 432.

The phone number uploading submodule 431 is configured to upload the phone number to a service end according to a predetermined period.

The use term receiving submodule 432 is configured to receive from the service end a use term queried according to the phone number uploaded by the phone number uploading submodule 431.

According to the above embodiment, the manner of acquiring the use term from a service end is simpler in implementation. This manner is smarter, and may reduce user operations and bring great convenience to the user.

Referring to Fig. 7, Fig. 7 is a block diagram illustrating another contact record processing apparatus according to an exemplary embodiment of the present disclosure. Based on the embodiment as illustrated in Fig. 4, in this embodiment, the apparatus may further include: a phone number acquiring module 440, an information acquiring module 450, a contact querying module 460, and an adding module 470.

The phone number acquiring module 440 is configured to, upon receipt of a call connection request from a calling end, acquire an incoming phone number according to the call connection request.

The information acquiring module 450 is configured to acquire calling user information of the calling end from the service end when the phone number acquired by the phone number acquiring module 440 is not stored in the contact record.

The contact querying module 460 is configured to query whether a target contact corresponding to the calling user information acquired by the information acquiring module 450 is recorded in the contact record, one or a plurality of contacts and user information corresponding to the contacts being recorded in the contact record.

The adding module 470 is configured to add the phone number to user information corresponding to the target contact when it is queried by the contact querying module 460 that the target contact is recorded in the contact record.

According to the above embodiment, a call connection request from a calling end may be received; and when the phone number is not stored in a contact record of the called end, calling user information of the calling end queried by the service end may be acquired, and a corresponding target contact in the contact record may be determined according to the calling user information. Therefore, according to the present disclosure, the phone number may be automatically added to user information corresponding to the target contact. According to the present disclosure, more user information of a calling user may be acquired via a service end, and thus the calling user may be identified and the phone number may be automatically stored, which brings great convenience to the user.

Referring to Fig. 8, Fig. 8 is a block diagram illustrating another contact record processing apparatus according to an exemplary embodiment of the present disclosure. Based on the embodiment as illustrated in Fig. 4, in this embodiment, the information acquiring module 450 includes: a sending submodule 451 and an information receiving submodule 452.

The sending submodule 451 is configured to send the incoming phone number to the service end.

The information receiving submodule 452 is configured to receive, from the service end, calling user information queried according to the incoming phone number sent by the sending submodule.

According to the above embodiment, since user information corresponding to a plurality of users is recorded in the service end, an incoming phone number may be sent to the service end, such that the service end may query user information of the calling end according to the incoming phone number. This manner is simple in implementation and achieves high accuracy.

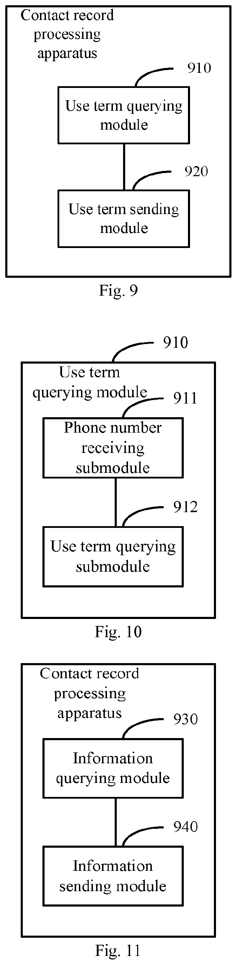

As illustrated in Fig. 9, Fig. 9 is a block diagram of another contact record processing apparatus according to an exemplary embodiment of the present disclosure. The apparatus includes: a use term querying module 910 and a use term sending module 920.

The use term querying module 910 is configured to query a use term of a phone number stored in a contact record of a terminal.

The use term sending module 920 is configured to send the use term queried by the use term querying module 910 to the terminal, such that the terminal deletes the phone number from the contact record when it is detected that use time of the phone number is greater than the use term.

According to the above embodiment, the service end may query a use term corresponding to a phone number and provide the use term to the terminal, such that the terminal deletes the phone number from the contact record when detecting that use time of the phone number is greater than the use term, thereby assisting a user to conveniently manage an address book and bringing great convenience to the user.

Referring to Fig. 10, Fig. 10 is a block diagram illustrating another contact record processing apparatus according to an exemplary embodiment of the present disclosure. Based on the embodiment as illustrated in Fig. 9, in this embodiment, the use term querying module 910 includes: a phone number receiving submodule 911 and a use term querying submodule 912.

The phone number receiving submodule 911 is configured to receive a phone number uploaded by the terminal.

The use term querying submodule 912 is configured to query a use term corresponding to the phone number received by the phone number receiving submodule 911 in a first predetermined relationship table, a corresponding relationship between phone numbers and use terms being recorded in the first predetermined relationship table.

According to the above embodiment, the service end may record a corresponding relationship between phone numbers and use terms by establishing a first predetermined relationship table. When a terminal needs to acquire a use term, the service end may query the corresponding use term from the first predetermined relationship table according to the phone number sent by the terminal, and feed back the use term to the terminal. This manner is simple in implementation, which facilitates query of the use term and achieves high accuracy.

Referring to Fig. 11, Fig. 11 is a block diagram illustrating another contact record processing apparatus according to an exemplary embodiment of the present disclosure. Based on the embodiment as illustrated in Fig. 9, in this embodiment, the apparatus may further include an information querying module 930 and an information sending module 940.

The information querying module 930 is configured to query calling user information of a calling end initiating a call connection request to the terminal.

The information sending module 940 is configured to send the calling user information queried by the information querying module 930 to the terminal, such that the terminal adds the phone number to user information of a target contact corresponding to the calling user information in the contact record.

According to the above embodiment, the service end may feed back calling user information to the terminal, and the terminal adds the phone number to user information of a target contact corresponding to the calling user information in the contact record, such that upon receipt of a call initiated by the calling end by using a temporary phone number, the terminal automatically adds the temporary phone number to the contact record.

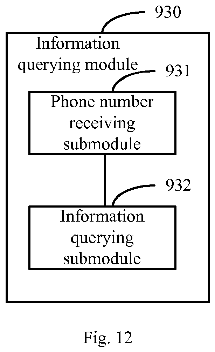

Referring to Fig. 12, Fig. 12 is a block diagram illustrating another contact record processing apparatus according to an exemplary embodiment of the present disclosure. Based on the embodiment as illustrated in Fig. 9, in this embodiment, the information querying module 930 includes: a phone number receiving submodule 931 and an information querying submodule 932.

The phone number receiving submodule 931 is configured to receive an incoming phone number uploaded by the terminal upon receipt of the call connection request.

The information querying submodule 932 is configured to query calling user information corresponding to the incoming phone number received by the phone number receiving module 931 in a second predetermined relationship table, a corresponding relationship between user information and phone numbers being recorded in the second predetermined relationship table.

According to the above embodiment, the service end may record a corresponding relationship between phone numbers and user information by establishing a second predetermined relationship table. When a terminal needs to acquire calling user information, the service end may query the corresponding calling user information from the second predetermined relationship table according to the incoming phone number sent by the terminal, and feed back the calling user information to the terminal. This manner is simple in implementation, which facilitates query of the calling user information and achieves high accuracy.

Correspondingly, the present disclosure further provides a contact record processing apparatus, wherein the apparatus includes a processor and a memory for storing instructions executable by the processor. The processor is configured to:
detect whether use time of a phone number stored in a contact record is greater than a use term of the phone number; and
delete the phone number from the contact record when the use time is greater than the use term.

Correspondingly, the present disclosure further provides another contact record processing apparatus, wherein the apparatus includes a processor and a memory for storing instructions executable by the processor. The processor is configured to:
query a use term of a phone number stored in a contact record of a terminal;
send the queried use term to the terminal, such that the terminal deletes the phone number from the contact record when it is detected that use time of the phone number is greater than the use term.

Specific implementation of functions and effects of various units in the above apparatuses may be referenced to the implementation of the corresponding steps in the methods, which is thus not described herein any further.

With respect to the apparatus embodiments, since the apparatus embodiments are based on the method embodiments, relevant parts may be referenced to the equivalents in the method embodiments. The above-described apparatus embodiments are merely exemplary only. The units used as separate components may be or may not be physically independent of each other. The element illustrated as a unit may be or may not be a physical unit, that is be either located at a position or deployed on a plurality of network units. Part of or all of the modules may be selected as required to implement the technical solutions disclosed in the embodiments of the present disclosure. Persons of ordinary skills in the art may understand and implement the embodiments without any creative effort.

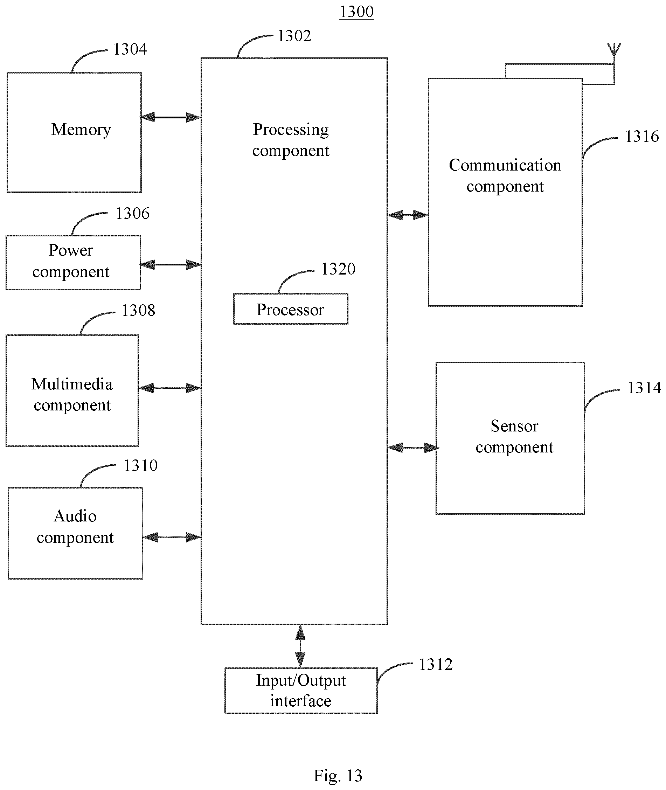

Referring to Fig. 13, Fig. 13 is a block diagram illustrating an apparatus 1300 for use in contact record processing illustrated in FIG. 4 according to an exemplary embodiment of the present disclosure. For example, the apparatus 1300 may be a mobile phone, a computer, a digital broadcast terminal, a messaging device, a gaming console, a tablet, a medical device, exercise equipment, a personal digital assistant, and the like having the routing function.

Referring to Fig. 13, the apparatus 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the apparatus 1300, such as the operations associated with display, telephone calls, data communications, camera operations, and recording operations. The processing component 1302 may include one or more processors 1320 to execute instructions to perform all or a part of the steps in the above-described methods. In addition, the processing component 1302 may include one or more modules which facilitate the interaction between the processing component 1302 and other components. For example, the processing component 1302 may include a multimedia module to facilitate the interaction between the multimedia component 1308 and the processing component 1302.

The memory 1304 is configured to store various types of data to support the operations of the apparatus 1300. Examples of such data include instructions for any application or method operated on the apparatus 1300, contact data, phonebook data, messages, pictures, videos, and the like. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the apparatus 1300. The power component 1306 may include a power management system, one or more power supplies, and other components associated with the generation, management, and distribution of power in the apparatus 1300.

The multimedia component 1308 includes a screen providing an output interface between the apparatus 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and/or the rear camera may receive external multimedia data while the apparatus 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the apparatus 1300 is in an operation mode, such as a call mode, a recording mode, or a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and a peripheral interface module, such as a keyboard, a click wheel, a button, or the like. The buttons may include, but are not limited to, a home button, a volume button, a starting button, and a locking button.

The sensor component 1314 includes one or more sensors to provide status assessments of various aspects of the apparatus 1300. For example, the sensor component 1314 may detect an open/closed status of the apparatus 1300, relative positioning of components, e.g., the display and the keypad, of the apparatus 1300; and the sensor component 1314 may further detect a change in position of the apparatus 1300 or a component of the apparatus 1300, a presence or absence of user contact with the apparatus 1300, an orientation or an acceleration/deceleration of the apparatus 1300, and a change in temperature of the apparatus 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, a microwave sensor, or a temperature sensor.

The communication component 1316 is configured to facilitate wired or wireless communications between the apparatus 1300 and other devices. The apparatus 1300 may access a wireless network based on a communication standard, such as WiFi, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described contact record processing methods.

In exemplary embodiments, there is also provided a non-transitory computer-readable storage medium including instructions, such as included in the memory 1304, executable by the processor 1320 in the apparatus 1300, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

A non-transitory computer-readable storage medium is provided. When instructions stored in the storage medium are executed by a processor of a terminal, the terminal is caused to perform a contact record processing method, wherein the method includes:
detecting whether use time of a phone number stored in a contact record is greater than a use term of the phone number; and
deleting the phone number from the contact record when the use time is greater than the use term.

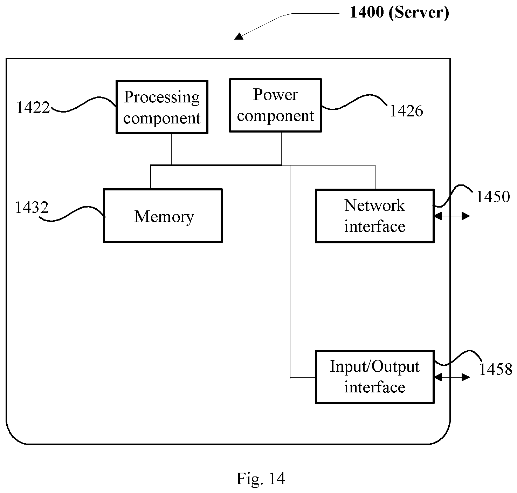

Fig. 14 is a block diagram illustrating an apparatus 1400 for use in contact record processing illustrated in Fig. 9 according to an exemplary embodiment of the present disclosure. For example, the apparatus 1400 may be provided as a server. Referring to Fig. 14, the apparatus 1400 includes a processing component 1422, which further includes one or more processors and memory resources represented by a memory 1432, configured to store instructions executable by the processing component 1422, for example, applications. The applications stored in the memory 1432 may include one or more than one module each corresponding to a group of instructions. In addition, the processing component 1422 is configured to execute the instructions, to perform the above contact record processing methods.

The apparatus 1400 may further include: a power component 1426, configured to perform power management in the apparatus 1400; a wired or wireless network interface 1450, configured to connect the apparatus 1400 to the network; and an input/output (I/O) interface 1458. The apparatus 1400 may operate an operating system stored in the memory 1432, for example, Windows ServerTM, Mac OS XTM, UnixTM, LinuxTM, FreeBSDTM, or the like.

The present disclosure provides a contact record processing method, including:
querying a use term of a phone number stored in a contact record of a terminal;
sending the queried use term to the terminal, such that the terminal deletes the phone number from the contact record when it is detected that use time of the phone number is greater than the use term.

In the above method, the querying a use term of a phone number stored in a contact record of a terminal includes:
receiving a phone number uploaded by the terminal; and
querying a use term corresponding to the phone number in a first predetermined relationship table, a corresponding relationship between phone numbers and use terms being recorded in the first predetermined relationship table.

In the above method, the method further includes:
querying calling user information of a calling end initiating a call connection request to the terminal; and
sending the calling user information to the terminal, such that the terminal adds the phone number to user information of a target contact corresponding to the calling user information in the contact record.

In the above method, the querying calling user information of a calling end initiating a call connection request to the terminal includes:
receiving an incoming phone number uploaded by the terminal upon receipt of the call connection request; and
querying calling user information corresponding to the incoming phone number in a second predetermined relationship table, a corresponding relationship between user information and phone numbers being recorded in the second predetermined relationship table.

The present disclosure provides a contact record processing apparatus, including:
a use term querying module, configured to query a use term of a phone number stored in a contact record of a terminal; and
a use term sending module, configured to send the use term queried by the use term querying module to the terminal, such that the terminal deletes the phone number from the contact record when it is detected that use time of the phone number is greater than the use term.

In the above apparatus, the term querying module includes:
a phone number receiving submodule, configured to receive a phone number uploaded by the terminal; and
a use term querying submodule, configured to query a use term corresponding to the phone number received by the phone number receiving submodule in a first predetermined relationship table, a corresponding relationship between phone numbers and use terms being recorded in the first predetermined relationship table.

In the above apparatus, the apparatus further includes:
an information querying module, configured to query calling user information of a calling end initiating a call connection request to the terminal; and
an information sending module, configured to send the calling user information queried by the information querying module to the terminal, such that the terminal adds the phone number to user information of a target contact corresponding to the calling user information in the contact record.

In the above apparatus, the information querying module includes:
a phone number receiving submodule, configured to receive an incoming phone number uploaded by the terminal upon receipt of the call connection request; and
an information querying submodule, configured to query calling user information corresponding to the incoming phone number received by the phone number receiving module in a second predetermined relationship table, a corresponding relationship between user information and phone numbers being recorded in the second predetermined relationship table.

The present disclosure provides an apparatus for use in contact record processing, including:
a processor; and
a memory for storing instructions executable by the processor;
wherein the processor is configured to:
query a use term of a phone number stored in a contact record of a terminal; and
send the queried use term to the terminal, such that the terminal deletes the phone number from the contact record when it is detected that use time of the phone number is greater than the use term.

Other embodiments of the present disclosure will be apparent to those skilled in the art from consideration of the specification and practice disclosed herein. This application is intended to cover any variations, uses, or adaptive variations of the present disclosure following the general principles thereof and including such departures from the present disclosure as coming within common knowledge or customary technical means in the art. It is intended that the specification and embodiments be considered as exemplary only, with a true scope of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

Described above are merely preferred embodiments of the present disclosure, but are not intended to limit the present disclosure.

## Claims

1. A contact record processing method for a smart terminal with an address book function to store phone numbers, the method comprising the steps of:
receiving (201) a call connection request from a terminal having a virtual SIM card;
acquiring (201) a temporary phone number of the virtual SIM card according to the call connection request;
determining that the temporary phone number of the virtual SIM card is not stored in a contact record;
acquiring (202) a use term and user information of the virtual SIM card by:
uploading the temporary phone number to a service end; and,
receiving user information of the virtual SIM card and a use term corresponding to the temporary phone number from the service end, the use term being a time duration starting from the date on which the temporary phone number was bought;
adding, to the contact record, the temporary phone number and the use term of the temporary phone number to user information of a target contact corresponding to the user information received from the service end;
re-acquiring the use term periodically from the service end, according to a predetermined period;
detecting (101) whether a current time that the temporary phone number has been stored in the contact record is greater than the acquired use term of the temporary phone number; and
deleting (102) the temporary phone number from the contact record when the use time is greater than the use term.

2. The method according to claim 1, wherein the step of adding, to the contact record, the temporary phone number and the use term of the temporary phone number, to the user information of a target contact corresponding to the user information received from the service end further comprises:
querying (203) whether the target contact corresponding to the user information received from the service end is recorded in the contact record; and
adding (204) the temporary phone number to user information corresponding to the target contact when it is queried that the target contact is recorded in the contact record.

3. A contact record processing apparatus in a smart terminal with an address book function to store phone numbers, the apparatus configured to receive a call connection request from a terminal having a virtual SIM card, acquire a temporary phone number of the virtual SIM card according to the call connection request, determine that the temporary phone number of the virtual SIM card is not stored in a contact record, acquire a use term and user information of the virtual SIM card by forwarding the phone number to a service end and, receiving a use term corresponding to the temporary phone number from the service end, the use term being a time duration starting from the date on which the phone number was bought, the apparatus comprising, add to a contact record the temporary phone number and the use term of the temporary phone number to the user information of a target contact corresponding to the user information received from the service end:
a use term acquiring module (430), configured to periodically re-acquire the use term from the service end according to a predetermined period
a detecting module (410), configured to detect whether a current time that the temporary phone number has been stored in the contact record is greater than the acquired use term of the phone number; and
a deleting module (420), configured to delete the temporary phone number from the contact record when it is detected by the detecting module that the use time of the phone number is greater than the use term.

4. The apparatus according to claim 3, wherein the apparatus further comprises:
a contact querying module (460), configured to query whether the target contact corresponding to the calling user information acquired by the information acquiring module is recorded in the contact record; and
an adding module (470), configured to add the temporary phone number to user information corresponding to the target contact when it is queried by the contact querying module that the target contact is recorded in the contact record.

5. A computer program comprising instructions which, when the computer program is executed by a contract record processing apparatus in a smart terminal, cause the contact record processing apparatus to carry out the method of claim 1 or claim 2.

## Patentansprüche

1. Kontaktdatensatz-Verarbeitungsverfahren für ein intelligentes Endgerät mit einer Adressbuchfunktion zum Speichern von Telefonnummern, wobei das Verfahren die folgenden Schritte beinhaltet:
Empfangen (201) einer Anrufverbindungsanforderung von einem Endgerät mit einer virtuellen SIM-Karte;
Erfassen (201) einer temporären Telefonnummer der virtuellen SIM-Karte gemäß der Anrufverbindungsanforderung;
Feststellen, dass die temporäre Telefonnummer der virtuellen SIM-Karte nicht in einem Kontaktdatensatz gespeichert ist;
Erfassen (202) einer Nutzungsdauer und von Benutzerinformationen der virtuellen SIM-Karte durch:
Hochladen der temporären Telefonnummer auf ein Service-Ende; und
Empfangen von Benutzerinformationen der virtuellen SIM-Karte und einer Nutzungsdauer entsprechend der temporären Telefonnummer vom Service-Ende, wobei die Nutzungsdauer eine Zeitdauer ist, die mit dem Kaufdatum der temporären Telefonnummer beginnt;
Hinzufügen, zum Kontaktdatensatz, der temporären Telefonnummer und der Nutzungsdauer der temporären Telefonnummer zu Benutzerinformationen eines Zielkontakts entsprechend den vom Service-Ende empfangenen Benutzerinformationen;
periodisches Wiedererfassen der Nutzungsdauer vom Service-Ende gemäß einer vorbestimmten Periode;
Erkennen (101), ob eine aktuelle Zeit, zu der die temporäre Telefonnummer im Kontaktdatensatz gespeichert wurde, größer ist als die erfasste Nutzungsdauer der temporären Telefonnummer; und
Löschen (102) der temporären Telefonnummer aus dem Kontaktdatensatz, wenn die Nutzungszeit größer ist als die Nutzungsdauer.

2. Verfahren nach Anspruch 1, wobei der Schritt des Hinzufügens, zum Kontaktdatensatz, der temporären Telefonnummer und der Nutzungsdauer der temporären Telefonnummer zu den Benutzerinformationen eines Zielkontakts entsprechend den vom Service-Ende empfangenen Benutzerinformationen ferner Folgendes beinhaltet:
Abfragen (203), ob der Zielkontakt entsprechend den vom Service-Ende empfangenen Benutzerinformationen im Kontaktdatensatz aufgezeichnet ist; und
Hinzufügen (204) der temporären Telefonnummer zu Benutzerinformationen entsprechend dem Zielkontakt, wenn abgefragt wird, dass der Zielkontakt im Kontaktdatensatz aufgezeichnet ist.

3. Kontaktdatensatz-Verarbeitungsvorrichtung in einem intelligenten Endgerät mit einer Adressbuchfunktion zum Speichern von Telefonnummern, wobei die Vorrichtung konfiguriert ist zum Empfangen einer Anrufverbindungsanforderung von einem Endgerät mit einer virtuellen SIM-Karte, Erfassen einer temporären Telefonnummer der virtuellen SIM-Karte gemäß der Anrufverbindungsanforderung, Feststellen, dass die temporäre Telefonnummer der virtuellen SIM-Karte nicht in einem Kontaktdatensatz gespeichert ist, Erfassen einer Nutzungsdauer und von Benutzerinformationen der virtuellen SIM-Karte durch Weiterleiten der Telefonnummer zu einem Service-Ende und Empfangen einer Nutzungsdauer entsprechend der temporären Telefonnummer vom Service-Ende, wobei die Nutzungsdauer eine Zeitdauer ist, die mit dem Kaufdatum der Telefonnummer beginnt, wobei die Vorrichtung umfasst:
Hinzufügen, zu einem Kontaktdatensatz, der temporären Telefonnummer und der Nutzungsdauer der temporären Telefonnummer zu den Benutzerinformationen eines Zielkontakts entsprechend den vom Service-Ende empfangenen Benutzerinformationen:
ein Nutzungsdauererfassungsmodul (430), konfiguriert zum periodischen Wiedererfassen der Nutzungsdauer vom Service-Ende gemäß einer vorbestimmten Periode;
ein Erkennungsmodul (410), konfiguriert zum Erkennen, ob eine aktuelle Zeit, zu der die temporäre Telefonnummer im Kontaktdatensatz gespeichert wurde, größer ist als die erfasste Nutzungsdauer der Telefonnummer; und
ein Löschmodul (420), konfiguriert zum Löschen der temporären Telefonnummer aus dem Kontaktdatensatz, wenn das Erkennungsmodul erkennt, dass die Nutzungszeit der Telefonnummer länger als die Nutzungsdauer ist.

4. Gerät nach Anspruch 3, wobei die Vorrichtung ferner Folgendes umfasst:
ein Kontaktabfragemodul (460), konfiguriert zum Abfragen, ob der Zielkontakt entsprechend den vom Informationserfassungsmodul erfassten Anrufbenutzerinformationen im Kontaktdatensatz aufgezeichnet ist; und
ein Hinzufügungsmodul (470), konfiguriert zum Hinzufügen der temporären Telefonnummer zu Benutzerinformationen entsprechend dem Zielkontakt, wenn das Kontaktabfragemodul abfragt, dass der Zielkontakt im Kontaktdatensatz aufgezeichnet ist.

5. Computerprogramm, das Befehle umfasst, die bei Ausführung des Computerprogramms durch eine Kontaktdatensatz-Verarbeitungsvorrichtung in einem intelligenten Endgerät bewirken, dass die Kontaktdatensatz-Verarbeitungsvorrichtung das Verfahren nach Anspruch 1 oder Anspruch 2 ausführt.

## Revendications

1. Procédé de traitement d'enregistrements de contacts pour un terminal intelligent à fonction de carnet d'adresses pour stocker des numéros de téléphone, le procédé comprenant les étapes suivantes :
la réception (201) d'une demande de connexion d'appel à partir d'un terminal muni d'une carte SIM virtuelle ;
l'acquisition (201) d'un numéro de téléphone temporaire de la carte SIM virtuelle conformément à la demande de connexion d'appel ;
la détermination que le numéro de téléphone temporaire de la carte SIM virtuelle n'est pas stocké dans un enregistrement de contact ;
l'acquisition (202) d'un délai d'utilisation et d'informations d'utilisateur de la carte SIM virtuelle en :
téléchargeant le numéro de téléphone temporaire sur une extrémité de service ; et,
recevant des informations d'utilisateur de la carte SIM virtuelle et un délai d'utilisation correspondant au numéro de téléphone temporaire à partir de l'extrémité de service, le délai d'utilisation étant une durée commençant à la date à laquelle le numéro de téléphone temporaire a été acheté ;
l'ajout, à l'enregistrement de contact, du numéro de téléphone temporaire et du délai d'utilisation du numéro de téléphone temporaire à des informations d'utilisateur d'un contact cible correspondant aux informations d'utilisateur reçues à partir de l'extrémité de service ;
la réacquisition périodique du délai d'utilisation à partir de l'extrémité de service, conformément à une période prédéterminée ;
la détection (101) qu'une durée actuelle de stockage du numéro de téléphone temporaire dans l'enregistrement de contact est supérieure ou non au délai d'utilisation acquis du numéro de téléphone temporaire ; et
la suppression (102) du numéro de téléphone temporaire de l'enregistrement de contact lorsque la durée d'utilisation est supérieure au délai d'utilisation.

2. Procédé selon la revendication 1, dans lequel l'étape d'ajout, à l'enregistrement de contact, du numéro de téléphone temporaire et du délai d'utilisation du numéro de téléphone temporaire, aux informations d'utilisateur d'un contact cible correspondant aux informations d'utilisateur reçues à partir de l'extrémité de service comprend en outre :
l'interrogation (203) que le contact cible correspondant aux informations d'utilisateur reçues à partir de l'extrémité de service est enregistré ou non dans l'enregistrement de contact ; et
l'ajout (204) du numéro de téléphone temporaire à des informations d'utilisateur correspondant au contact cible lorsqu'il est demandé que le contact cible soit enregistré dans l'enregistrement de contact.

3. Appareil de traitement d'enregistrements de contacts dans un terminal intelligent à fonction de carnet d'adresses pour stocker des numéros de téléphone, l'appareil étant configuré pour recevoir une demande de connexion d'appel à partir d'un terminal muni d'une carte SIM virtuelle, acquérir un numéro de téléphone temporaire de la carte SIM virtuelle conformément à la demande de connexion d'appel, déterminer que le numéro de téléphone temporaire de la carte SIM virtuelle n'est pas stocké dans un enregistrement de contact, acquérir un délai d'utilisation et des informations d'utilisateur de la carte SIM virtuelle en transférant le numéro de téléphone à une extrémité de service et, recevant un délai d'utilisation correspondant au numéro de téléphone temporaire à partir de l'extrémité de service, le délai d'utilisation étant une durée commençant à la date à laquelle le numéro de téléphone a été acheté, l'appareil comprenant, l'ajout à un enregistrement de contact du numéro de téléphone temporaire et du délai d'utilisation du numéro de téléphone temporaire aux informations d'utilisateur d'un contact cible correspondant aux informations utilisateur reçues à partir de l'extrémité de service :
un module d'acquisition de délai d'utilisation (430), configuré pour réacquérir périodiquement le délai d'utilisation à partir de l'extrémité de service conformément à une période prédéterminée
un module de détection (410), configuré pour détecter qu'une durée actuelle de stockage du numéro de téléphone temporaire dans l'enregistrement de contact est supérieure ou non au délai d'utilisation acquis du numéro de téléphone temporaire ; et
un module de suppression (420), configuré pour supprimer le numéro de téléphone temporaire de l'enregistrement de contact lorsque le module de détection détecte que la durée d'utilisation du numéro de téléphone est supérieure au délai d'utilisation.

4. Appareil selon la revendication 3, l'appareil comprenant en outre :
un module d'interrogation de contact (460), configuré pour déterminer que le contact cible correspondant aux informations d'utilisateur appelant acquises par le module d'acquisition d'informations est enregistré ou non dans l'enregistrement de contact ; et
un module d'ajout (470), configuré pour ajouter le numéro de téléphone temporaire à des informations d'utilisateur correspondant au contact cible lorsque le module d'interrogation de contact demande que le contact cible soit enregistré dans l'enregistrement de contact.

5. Programme d'ordinateur comprenant des instructions qui, lorsque le programme d'ordinateur est exécuté par un appareil de traitement d'enregistrements de contacts dans un terminal intelligent, amènent l'appareil de traitement d'enregistrements de contacts à mettre en œuvre le procédé selon la revendication 1 ou la revendication 2.
